Europäisches Patentamt

European Patent Office

Office européen des brevets

(19)

(11)  **EP 0 728 795 B1**

(12)  **EUROPÄISCHE PATENTSCHRIFT**

(45) Veröffentlichungstag und Bekanntmachung des Hinweises auf die Patenterteilung:
**09.08.2000   Patentblatt 2000/32**

(51) Int Cl.⁷: **C08J 3/12**, C08J 3/00, C08L 101/00, C11D 3/37

(21) Anmeldenummer: **96102309.0**

(22) Anmeldetag: **16.02.1996**

(54) **Verfahren zur Herstellung von feinteiligen Mischungen aus amphiphilen Polymeren und Polycarboxylaten und ihre Verwendung**

Process for preparing finely divided compositions of amphiphilic polymers and polycarboxylates and their use

Procédé pour préparer des mélanges finement divisés de polymères amphiphiles et de polycarboxylates et leur utilisation

(84) Benannte Vertragsstaaten:
**DE ES FR GB IT NL**

(30) Priorität: **25.02.1995  DE 19506634**

(43) Veröffentlichungstag der Anmeldung:
**28.08.1996   Patentblatt 1996/35**

(73) Patentinhaber: **BASF AKTIENGESELLSCHAFT**
**67056 Ludwigshafen (DE)**

(72) Erfinder:
• **Boeckh, Dieter, Dr.**
  **D-67117 Limburgerhof (DE)**
• **Jäger, Hans-Ulrich, Dr.**
  **D-67434 Neustadt (DE)**
• **Kud, Alexander, Dr.**
  **D-55234 Eppelsheim (DE)**
• **Trieselt, Wolfgang, Dr.**
  **D-76135 Karlsruhe (DE)**
• **Bühler, Wolfgang, Dr.**
  **D-68766 Hockenheim (DE)**

(56) Entgegenhaltungen:
GB-A- 1 332 732          US-A- 4 569 772
US-A- 5 142 020

## Beschreibung

Die Erfindung betrifft ein Verfahren zur Herstellung von feinteiligen Mischungen aus amphiphilen Polymeren und Polycarboxylaten sowie die Verwendung der Mischungen als Zusatz zu Waschmitteln.

Amphiphile Polymerisate mit sehr unterschiedlichen Eigenschaften im festen Zustand sind bekannt. Sie können kristallin, teilweise kristallin, glasartig erstarrt oder im kautschukelastischen Zustand oberhalb der Glasübergangstemperatur vorliegen. Amphiphile Polymere mit hoher Kristallinität werden beispielsweise durch Kondensation von Terephthalsäure oder Dimethylterephthalat mit Ethylenglykol und Polyethylenglykol hergestellt (vgl. US-A-3 557 039). Solche Polyester werden als Waschmitteladditiv verwendet. Sie verhindern beim Waschen von Textilgut die Wiederablagerung von Schmutz auf dem Textilgut, vgl. GB-A-1 154 730.

Aus den EP-Anmeldungen 185 427, 241 984, 241 985 und 272 033 sind Polyesterkondensate von mehrwertigen aromatischen Carbonsäuren mit zweiwertigen Alkoholen und einseitig $C_1$-$C_4$-Alkylgruppen verschlossenen Polyethern bekannt, die die Schmutzablösung von Polyestergeweben fördern. Diese Polyester besitzen hydrophile Endgruppen, die in den genannten Anmeldungen als Voraussetzung für die schmutzablösenden Eigenschaften der Polyester genannt werden. Diese Klasse von Polymeren wird auch als Soil-Release-Polymere bezeichnet.

Amphiphile Polyester aus aliphatischen mehrbasischen Carbonsäuren und/oder Monohydroxymonocarbonsäuren mit Polyethylenglykol werden beispielsweise in Polymer Bulletin, Band 17, 499 - 506 (1987) beschrieben.

Aus der US-A-5 142 020 sind amphiphile Polyester bekannt, die erhältlich sind durch Kondensation von

(a) Carbonsäuren mit mindestens 2 Carboxylgruppen, deren Estern, Anhydriden oder Mischungen,

(b) mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und

(c) wasserlöslichen Anlagerungsprodukten von 5 bis 80 mol mindestens eines Alkylenoxids an 1 mol $C_8$- bis $C_{29}$-Alkohole, $C_8$-bis $C_{18}$-Alkylphenole oder $C_8$- bis $C_{18}$-Alkylamine

im Molverhältnis (a):(b):(c) von 100:(25 bis 2500):(5 bis 110) bei Temperaturen von mindestens 120°C bis zu Molekulargewichten (Gewichtsmittel) von 2000 bis 50000. Die Polyester werden als vergrauungsinhibierender und schmutzablösungsfördernder Zusatz zu pulverförmigen und flüssigen Waschmitteln verwendet.

Die aus der nicht vorveröffentlichten DE-Anmeldung P 44 03 866.6 bekannten amphiphilen Polymeren sind Polyester, die Blöcke aus

(1) Estereinheiten aus Polyalkylenglykolen einer Molmasse von 500 bis 7500 und aliphatischen Dicarbonsäuren und/oder Monohydroxycarbonsäuren und

(2) Estereinheiten aus aromatischen Dicarbonsäuren und mehrwertigen Alkoholen

enthalten, Molmassen $M_w$ von 4000 bis 25000 haben und die Estereinheiten (1) und (2) vorzugsweise im Gewichtsverhältnis 5:1 bis 1:2 enthalten.

Die oben beschriebenen Polyester werden meistens in Form von wäßrigen Lösungen oder Dispersionen in die Waschmittelformulierungen eingearbeitet. Diese Anwendungsform ist aber in vielen Fällen unpraktisch oder sogar ungeeignet. Beispielsweise kann man die meisten Dispersionen von solchen amphiphilen Polyestern bei Raumtemperatur nicht in Konzentrationen oberhalb von 25 % verarbeiten, weil die Viskosität zu hoch ist. Hinzu kommt noch, daß eine Verarbeitung von wäßrigen Dispersionen amphiphiler Polyester unter alkalischen Bedingungen bei den üblichen höheren Verarbeitungstemperaturen meistens mit einer Hydrolyse und damit einem Wirksamkeitsabfall der Polyester zu rechnen ist. Andererseits ist es nicht möglich, rieselfähige Pulver oder Granulate aus wäßrigen Dispersionen amphiphiler Polyester durch Sprühtrocknung herzustellen.

Man hat daher Mischungen aus amphiphilen Polyestern und extrudierbaren organischen Feststoffen in fester Form miteinander vermahlen, die Mischung anschließend extrudiert und das Extrudat beispielsweise zu einem Granulat geformt, vgl. DE-A-22 49 812. Aus der US-A-4 569 772 sind Mischungen aus amphiphilen Polyestern und Polycarboxylaten bekannt, die durch Mischen geschmolzener Polyester mit einem Polyacrylat, Abkühlen der Mischung und Verkleinern des erhaltenen festen Produkts durch kryogene Methoden auf die gewünschte Teilchengröße erhältlich sind. Die kryogene Zerkleinerung des Materials wird dabei bei Temperaturen unter 0°C, manchmal sogar unter -50°C durchgeführt. Als Kühlmittel hierfür wird flüssiger Stickstoff oder festes Kohlendioxid (Trockeneis) empfohlen. Die so erhältlichen feinteiligen Mischungen sind jedoch nur schlecht in Wasser dispergierbar.

Der Erfindung liegt die Aufgabe zugrunde, ein Verfahren zur Herstellung von feinteiligen Mischungen aus amphiphilen Polymeren und Polycarboxylaten zur Verfügung zu stellen, bei dem man feinteilige Mischungen erhält, die bei Raumtempratur rieselfähig und lagerstabil sind und die in Wasser leicht dispergiert werden können.

Die Aufgabe wird erfindungsgemäß gelöst mit einem Verfahren zur Herstellung von feinteiligen Mischungen aus amphiphilen Polymeren und Polycarboxylaten, wenn man

a) wäßrige Dispersionen oder kolloidale wäßrige Lösungen mindestens eines amphiphilen Polymers und

b) eine wäßrige Lösung eines Polycarboxylats

im Gewichtsverhältnis a) : b) von 1 : 1 bis 1 : 20, jeweils bezogen auf die Feststoffe mischt oder mindestens ein amphiphiles Polymer in einer wäßrigen Lösung eines Polycarboxylats dispergiert und die so erhältlichen Dispersionen durch Sprühtrocknung zu einer feinteiligen Polymermischung verarbeitet. Die Aufgabe wird außerdem gelöst mit feinteiligen Polymermischungen einer Teilchengröße von 20 µm bis 3 mm, wenn die Mischungen nach dem vorstehend beschriebenen Verfahren hergestellt worden sind.

Bei den amphiphilen Polymeren handelt es sich hauptsächlich um Polyester. Sie haben beispielsweise eine Molmasse $M_W$ von 4000 bis 60.000 und enthalten als hydrophile Einheiten Polyethylenglykol, Blockcopolymerisate aus Ethylenoxid und Propylenoxid und/oder Butylenoxid mit Molmassen $M_n$ von 500 bis 8000 und/oder Sulfogruppen enthaltende ein- oder mehrbasische Carbonsäuren und weisen als hydrophobe Einheiten kondensierte Blöcke aus aromatischen mehrbasischen Carbonsäuren, gegebenenfalls in Kombination mit aliphatischen mehrbasischen Carbonsäuren und $C_2$- bis $C_4$-Alkylenglykolen und/oder 3- oder mehrwertigen Alkoholen auf.

Amphiphile Polyester der genannten Art sind aus den eingangs erwähnten Literaturstellen bekannt, vgl. US-A-3 557 039, EP-A-0 185 427, EP-A-0 241 984, EP-A-0 241 985, EP-A-0 272 033 und US-A-5 142 020. Eine bevorzugte Klasse von amphiphilen Polymeren sind Polyester, die Einheiten von

(1) Ethylenterephthalat und

(2) Polyoxyethylenterephthalat von Polyethylenglykolen mit Molmassen $M_n$ von 1000 bis 7500

im Gewichtsverhältnis (1) : (2) von 1 : 1 bis 1 : 25 enthalten.

Eine weitere Klasse von in Betracht kommenden amphiphilen Polymeren sind aus der US-A-5 142 020 bekannte Polyester, die erhältlich sind durch Kondensation von

(1) Carbonsäuren mit mindestens 2 Carboxylgruppen, deren Estern, Anhydriden oder Mischungen,

(2) mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und

(3) wasserlöslichen Anlagerungsprodukten von 5 bis 80 mol mindestens eines Alkylenoxids an 1 Mol $C_8$-bis $C_{24}$-Alkohole, $C_8$- bis $C_{18}$-Alkylphenole oder $C_8$-bis $C_{24}$-Alkylamine

im Molverhältnis (1) : (2) : (3) von 100 : (25 bis 2500) : (5 bis 110) bei Temperaturen von mindestens 120°C bis zu Molmassen $M_W$ von 4000 bis 50.000.

Eine weitere Klasse von bevorzugt in Betracht kommenden amphiphilen Polymeren sind aus der nicht vorveröffentlichten DE-Anmeldung P 44 03 866.6 bekannte Polyester. Sie enthalten Blöcke aus

(1) Estereinheiten aus Polyalkylenglykolen einer Molmasse von 500 bis 7500 und aliphatischen Dicarbonsäuren und/oder Mono- hydroxycarbonsäuren und

(2) Estereinheiten aus aromatischen Dicarbonsäuren und mehrwertigen Alkoholen

und haben Molmassen $M_W$ von 4000 bis 25000. Das Gewichtsverhältnis der Estereinheiten (1) : (2) beträgt dabei vorzugsweise 5:1 bis 1:2. Amphiphile Polyester dieser Art werden beispielsweise dadurch hergestellt, daß man zunächst durch Polykondensation

(1) aliphatische Polyester von Polyalkylenglykolen einer Molmasse von 500 bis 7500 mit aliphatischen Dicarbonsäuren und/oder Monohydroxycarbonsäuren herstellt und anschließend in dem so erhaltenen aliphatischen Polyester

(2) aromatische Polyester aus aromatischen Dicarbonsäuren und mehrwertigen Alkoholen herstellt.

Die Reihenfolge der Polykondensation kann dabei auch umgekehrt werden oder man kondensiert aromatische Polyester (2) mit oligomeren aliphatischen Polyestern (1). Das Gewichtsverhältnis der Polyester (1) : (2) in den amphiphilen Polyestern beträgt 5:1 bis 1:2.

Geeignete oben beschriebene Polyester sind in Abhängigkeit von der Molmasse bei Temperaturen unterhalb der Erweichungstemperatur wachsartig bis weich, teilweise kristallin und haben eine Erweichungstemperatur oberhalb von 25°C, bevorzugt oberhalb von 35°C. Unter Erweichungstemperatur soll im vorliegenden Zusammenhang bei teilweise kristallinen Polymeren immer das Maximum des Wärmeflusses im DSC beim Aufheizen verstanden werden. Die Bestimmung erfolgt mit Hilfe der DSC-Methode (Differential Scanning Calorimetry) mit einer Heizrate von 2,5°C/min. Die Bestimmungsmethode wird ausführlich beschrieben von J.F. Rabek, Experimental Methods in Polymer Chemistry, John Wiley & Sons, New York, 1980, Seiten 549-581. Die besonders bevorzugt eingesetzten amphiphilen Polyester haben Erweichungstemperaturen oberhalb von 45°C. Sie sind beispielsweise dadurch erhältlich, daß man bei der Herstellung der Polyester zur Bildung des hydrophilen Teils des Moleküls höhermolekulare Polyalkylenglykole einsetzt, z.B. Polyethylenglykole mit Molmassen von mindestens 1500, vorzugsweise mindestens 2500. Die dann entstehenden Polyester haben vorzugsweise Molmassen $M_W$ von mindestens 4000. Polyester mit Erweichungstemperaturen oberhalb von 45°C sind auch dadurch herstellbar, daß man bei der Polykondensation aromatische Carbonsäuren mit freien Sulfogruppen wie Sulfoisophthalsäure einsetzt und die Sulfonsäuregruppen nach Abschluß der Polykondensation mit Alkalimetall- oder Erdalkalimetallbasen neutralisiert.

Außer den oben beschriebenen Polyestern eignen sich amphiphile Polymere, die beispielsweise durch Pfropfen von Acrylsäureestern, Methacrylsäureestern, Vinylacetat und/oder Vinylpropionat auf wasserlöslichen Polyalkylenglykolen erhältlich sind. Die wasserlöslichen Polyalkylenglykole haben beispielsweise Molmassen $M_N$ von 2500 bis 20 000, vorzugsweise 4000 bis 9000 und können gegebenenfalls ein- oder beidseitig Endgruppen-verschlossen sein. Polymere dieser Art sind beispielsweise bekannt aus US-A-4 846 995, US-A-4 904 408, US-A-4 846 994 und DE-A-3 711 299.

Weitere geeignete, amphiphile Polymere sind Pfropfpolymerisate, die erhältlich sind von Pfropfen von

(1) Polykondensaten auf Basis von Polyestern, Polyesterurethanen und Polyesteramiden eines Molekulargewichts (Zahlenmittel) von jeweils 2500 bis 100000 mit

(2) 0,2 bis 10 Gew.-Teilen, bezogen auf 1 Gew.-Teil der Polykondensate, an Vinylestern, gesättigter $C_1$- bis $C_6$-Carbonsäuren und/oder Acrylsäure- und/oder Methacrylsäureestern von gesättigten, einwertigen 1 bis 4 C-Atome enthaltenden Alkoholen.

Solche Pfropfpolymerisate sind beispielsweise aus der US-A-4 849 126 bekannt.

Zur Herstellung der feinteiligen Mischungen setzt man als Komponente (b) eine wäßrige Lösung eines Polycarboxylats oder einer Mischung mehrerer Polycarboxylate ein. Geeignete Polycarboxylate sind beispielsweise Polymerisate ethylenisch ungesättigter Carbonsäuren. Hierbei kann es sich um Homopolymerisate von monoethylenisch ungesättigten Carbonsäuren oder auch um Copolymerisate solcher Carbonsäuren handeln. Geeignet sind beispielsweise monoethylenisch ungesättigte $C_3$- bis $C_{10}$-Monocarbonsäuren oder deren Salze wie Acrylsäure, Methacrylsäure, Dimethylacrylsäure, Ethylacrylsäure, Allylessigsäure und Vinylessigsäure. Vorzugsweise verwendet man aus dieser Gruppe von Monomeren Acrylsäure, Methacrylsäure oder Gemische dieser beiden Carbonsäuren. Sie können in Form der freien Carbonsäuren, in teilweise oder in vollständiger neutralisierter Form als Alkalimetall-, Ammonium- oder Erdalkalimetallsalze bei der Copolymerisation eingesetzt werden. Die Homopolymerisate der monoethylenisch ungesättigten Monocarbonsäuren und ihre Copolymerisate untereinander haben beispielsweise Molmassen von 1000 bis 500000, vorzugsweise von 2000 bis 250000.

Unter Polycarboxylaten sollen auch die Homo- und Copolymerisate von monoethylenisch ungesättigten $C_4$- bis $C_8$-Dicarbonsäuren verstanden werden. Hierunter fallen beispielsweise die Homopolymerisate der Maleinsäure, Fumarsäure, Itaconsäure, Metakonsäure, Citraconsäure, Methylenmalonsäure sowie - soweit bekannt - der entsprechenden Anhydride, die durch Hydrolyse und Neutralisation in den entsprechenden Carboxylate überführt werden können. Von den zuletzt genannten Polymerisaten kommen vorzugsweise Polymaleinsäure einer Molmasse von 200 bis 5000, deren Alkalimetall- oder Ammoniumsalze und insbesondere Polymaleinsäure mit einer Molmasse von 300 bis 2000 oder deren Salze in Betracht. Homopolymerisate der Maleinsäure sind Handelsprodukte. Sie werden beispielsweise durch Polymerisieren von Maleinsäure in wäßrigem Medium in Form der freien Säure oder in teil- oder vollneutralisierter Form mit radikalischen, bevorzugt wasserlöslichen Initiatoren oder durch Polymerisieren von Maleinsäureanhydrid in einem aromatischen Kohlenwasserstoff bei Temperaturen von 60 bis 200°C. in Gegenwart von Polymerisationsinitiatoren und Hydrolysieren und zumindest partielles Neutralisieren der Polymerisate hergestellt.

Als Polycarboxylate kommen auch die zumindest teilweise mit Alkalimetallbasen oder Ammoniak neutralisierten Copolymerisate aus $C_4$- bis $C_8$-Dicarbonsäuren und monoethylenisch ungesättigten $C_3$- bis $C_{10}$-Monocarbonsäuren oder deren Alkalimetalle-, Ammonium- oder Erdalkalimetallsalze in Betracht. Solche Copolymerisate können Monocarbonsäuren und Dicarbonsäuren in beliebigen Verhältnissen einpolymerisiert enthalten. Bevorzugt werden beispielsweise Copolymerisate aus 10 bis 40 Gew.-% monoethylenisch ungesättigten $C_4$- bis $C_8$-Dicarbonsäuren, deren Alkalimetall- oder Ammoniumsalze und 30 bis 90 Gew.-% monoethylenisch ungesättigten $C_3$- bis $C_{10}$-Monocarbonsäuren, deren Alkalimetall- oder Ammoniumsalze. Besonders bevorzugt aus dieser Gruppe von Copolymerisaten sind Maleinsäure-Acrylsäure-Copolymerisate. Die Herstellung solcher Copolymerisate ist beispielsweise aus der EP-B 0 075 820 bekannt. Die Copolymerisate haben beispielsweise Molmassen von 5000 bis 300000, vorzugsweise 40000 bis 150000.

Unter Polycarboxylaten sollen auch Polyamidocarboxylate verstanden werden, die beispielsweise durch Polykondensation von Asparaginsäure und/oder Glutaminsäure und zumindest teilweise Neutralisation erhältlich sind. Solche Polyamidocarboxylate werden beispielsweise in der EP-A 0 454 126 für den Einsatz in Waschmitteln beschrieben. Die Molmassen solcher Polykondensate betragen beispielsweise 1000 bis 150000 und liegen vorzugsweise in dem Bereich von 2000 bis 100000. Homopolymerisate der Asparaginsäure und Cokondensate der Asparaginsäure mit anderen Aminosäuren sind bekannt. Sie werden beispielsweise durch thermische Kondensation von Asparaginsäure oder Mischungen aus Asparaginsäure mit mindestens einer anderen Aminosäure hergestellt. Die thermische Kondensation erfolgt besonders leicht in Gegenwart von Phosphorsäure. Geeignete Polyaminocarboxylate werden in der WO-A 94/011486 beschrieben. Die modifizierten Polyasparaginsäuren sind beispielsweise dadurch erhältlich, daß man 1 bis 99,9 Mol-% Asparaginsäure mit 99 bis 0,1 Mol-% an Fettsäuren, mehrbasischen Carbonsäuren, Anhydriden mehrbasischer Carbonsäuren, mehrbasischen Hydroxycarbonsäuren, einbasische Polyhydroxycarbonsäuren, Alkohole, Amine, alkoxylierter Alkohole oder Amine, Aminozucker, Kohlenhydraten, Zuckercarbonsäuren und/oder nichtproteinogenen Aminosäuren kondensiert oder monoethylenisch ungesättigte Monomere in Gegenwart von Polyasparaginsäuren und/oder Cokondensaten der Asparaginsäure nach Art einer radikalisch initiierten Pfropfpolymerisation polymerisiert. Die Polykondensation wird vorzugsweise in Gegenwart von Säuren durchgeführt, z.B. Salzsäure, Phosphorsäure, Polyphosphorsäuren, phosphorige Säure, unterphosphorige Säure, Schwefelsäure, Mischungen der genannten Säuren oder in Gegenwart von Natrium- oder Kaliumhydrogensulfat. Vorzugsweise verwendet man aus dieser Gruppe von Polyamidocarboxylaten zumindest teilweise mit Alkalimetallbasen, insbesondere Natronlauge oder Kalilauge neutralisierte Polyasparaginsäure.

Polyestercarboxylate sind eine weitere Klasse von Verbindungen, die in zumindest partiell neutralisierter Form als Mischungsbestandteil für amphiphile Polymere in Betracht kommen. Solche Produkte sind beispielsweise erhältlich durch Veresterung von Polyhydroxyverbindungen wie Stärke, Stärkeabbauprodukten, Polyvinylalkohol, Oligoglycerin, Sorbit, Manit und/oder Glycerin mit Citronensäure, Isocitronensäure und/oder Butantetracarbonsäure. Verbindungen dieser Art sind bekannt, vgl. EP-A-0 433 010, WO-A-93/22362 und WO-A-93/13192.

Zu dieser Gruppe von Polycarboxylaten gehören auch Polykondensationsprodukte von mehrbasischen Hydroxycarbonsäuren wie Citronensäure, Isocitronensäure, Äpfelsäure, Weinsäure, Tartronsäure sowie daraus durch Modifizierung erhältliche Derivate, vgl. US-A-5 217 642.

Unter Polycarboxylaten sollen auch Pfropfpolymerisate von monoethylenisch ungesättigten Mono- und/oder Dicarbonsäuren, Mono- und/oder Polysacchariden oder Polyalkylenoxiden verstanden werden. Pfropfpolymerisate, die einen Naturstoff als Grundlage haben, werden beispielsweise in der JP-A 55/155097, der JP-A-61/031498 und der EP-A-0 441 197 beschrieben. Gemäß der Lehre der JP-Anmeldungen werden Acrylsäure oder Methacrylsäure in Gegenwart von Mono- oder Polysacchariden unter Bildung von Pfropfpolymerisaten polymerisiert. Gemäß der Lehre der EP-A-0 441 197 polymerisiert man Monomermischungen aus

(A) monoethylenisch ungesättigte $C_3$- bis $C_{10}$-Carbonsäuren, deren Anhydriden, Alkalimetall-, Ammonium- oder Erdalkalimetallsalze in Gegenwart von

(B) Mono-, Oligo- oder Polysacchariden, die gegebenenfalls oxidativ, hydrolytisch oder enzymatisch abgebaut sind, chemisch modifzierten Mono-, Oligo- und Polysacchariden oder Mischungen der genannten Verbindungen im Gewichtsverhältnis (A) : (B) von (95 bis 20) : (5 bis 80). Von den monoethylenisch ungesättigten Carbonsäuren verwendet man vorzugsweise Acrylsäure, Methacrylsäure, Maleinsäure oder deren Mischungen. Besonders bevorzugt sind hierbei Pfropfcopolymerisate, die durch Polymerisation von Acrylsäure und Maleinsäure in Gegenwart von Mono- oder Polysacchariden erhältlich sind. Als Pfropfgrundlage verwendet man vorzugsweise Hydrierungsprodukte von Stärkehydrolysaten, wie Sorbit und Manit, Maltit und hydrierte Glukosesirupe. Die Pfropfpolymerisate haben Molmassen von 5000 bis 150000, vorzugsweise 10000 bis 100000.

Als Pfropfgrundlage kommen außerdem Polyalkylenoxide in Betracht, die Molmassen von 200 bis 20.000 haben. Weitere geeignete Polycarboxylate sind Citronensäure und oxidierte Stärken, vorzugsweise monooxidierte Stärke, die beispielsweise in WO-A-93/08251 beschrieben wird.

Bevorzugt eingesetzte Polycarboxylate sind Copolymerisate aus 80 bis 25 Gew.-% Maleinsäure und 20 bis 75 Gew.-% Acrylsäure, Terpolymerisate aus 5 bis 60 Gew.-% Maleinsäure, 5 bis 70 Gew.-% Acrylsäure und 20 bis 60 Gew.-% Vinylacetat, Oligomaleinsäure, Polyasparaginsäure und Citronensäure. Die Polycarboxylate werden zumindest in partiell neutralisierter oder in vollständig neutralisierter Form eingesetzt. Der Neutralisationsgrad beträgt mindestens 20 % und liegt meistens in dem Bereich von 40 bis 100 %. Die zumindest teilweise neutralisierten Polycarboxylate sind unschmelzbar bzw. schmelzen unter Zersetzung. Zur Herstellung der erfindungsgemäßen feinteiligen Mischungen kann man beispielsweise derart vorgehen, daß man eine wäßrige Dispersion oder kolloidale wäßrige Lösung mindestens eines amphiphilen Polymers vorlegt und unter intensivem Durchmischen die wäßrige Lösung eines Polycarboxylats zudosiert. Man kann jedoch auch eine Lösung des Polycarboxylats vorlegen und eine wäßrige Dispersion oder kolloidale wäßrige Lösung mindestens eines amphiphilen Polymers zudosieren. Die verwendeten wäßrigen Dispersionen oder kolloidalen wäßrigen Lösungen der amphiphilen Polymeren und der wäßrigen Lösungen der Carboxylate haben beispielsweise jeweils Feststoffgehalte von 20 bis 60, vorzugsweise 25 bis 45 Gew.-%. Der pH-Wert der wäßrigen Dispersionen der amphiphilen Polymeren kann beispielsweise 2,5 bis 10 betragen und liegt üblicherweise in dem Bereich von 3 bis 7, vorzugsweise 3 bis 6,5. Die Temperatur, bei der die Komponenten a) und b) miteinander gemischt werden, kann beispielsweise 5 bis 100°C betragen und liegt vorzugsweise in dem Bereich von 20 bis 60°C. Um die Vermischung der Komponenten a) und b) zu erleichtern, kann es in manchen Fällen von Vorteil sein, wenn man das Mischen in Gegenwart von Verbindungen vornimmt, die die Mischung stabilisieren. Solche Verbindungen c) sind beispielsweise oberflächenaktive Stoffe wie anionische und nichtionische Tenside, beispielsweise $C_6$- bis $C_{25}$-Alkoholsulfate, $C_6$- bis $C_{25}$-Alkoholsulfonate, $C_4$- bis $C_{18}$-Alkylsulfonate, alkoxylierte $C_6$- bis $C_{25}$-Alkohole oder alkoxylierte $C_4$- bis $C_{18}$-Alkylphenole, wobei der Gehalt an einkondensiertem Ethylenoxid bei den alkoxylierten Produkten 3 bis 25 Mol/Mol Alkohol oder Phenol beträgt. Ebenso eignen sich solche Alkoxylierungsprodukte, bei denen bis zu 30 % des Ethylenoxids durch Propylenoxid und/oder Butylenoxid ersetzt ist. Ebenso kommen die daraus erhältlichen Sulfate und Sulfonate als oberflächenaktive Verbindungen in Betracht.

Die Vermischung der Komponente a) und b) wird durch Schutzkolloide erleichtert bzw. werden durch Verwendung von Schutzkolloiden solche Mischungen stabilisiert. Geeignete Schutzkolloide sind beispielsweise Stärken, Abbauprodukte von Stärke und Cellulose sowie durch Veresterung, Veretherung oder durch Oxidation modifizierte Stärken und Cellulosen, wie Maltodextrine, Carboximethylstärke, Carboximethylcellulose, Methylcellulose und Hydroxypropylcellulose. Neben den obengenannten natürlichen Schutzkolloiden und den daraus durch Umsetzung erhältlichen Derivaten kommen synthetische Schutzkolloide als Stabilisatoren für die Mischungen aus den Komponenten a) und b) in Betracht. Geeignete synthetische Schutzkolloide sind beispielsweise Polyvinylpyrrolidone, Polyvinylalkohole und Polyalkylvinylether. Die zur Stabilisierung verwendeten Verbindungen c) können bei der Herstellung der erfindungsgemäßen Mischungen im Reaktor zusammen mit der Komponente a) oder b) vorgelegt werden oder mit einer Komponente zur Vorlage zudosiert werden. Selbstverständlich ist es auch möglich, alle drei Komponenten gleichzeitig kontinuierlich zu mischen oder zu einer Vorlage zuzugeben und zu mischen. Falls Verbindungen der Komponente c) bei der Herstellung der wäßrigen Dispersionen mitverwendet wird, so betragen die eingesetzten Mengen 0,1 bis 20 Gew.-%, vorzugsweise 0,25 bis 10 Gew.-%, bezogen auf die Feststoffe der Komponenten a) und b).

Zur Herstellung der Mischungen setzt man die Verbindung a) zu b) im Gewichtsverhältnis von 1 : 1 bis 1 : 20, vorzugsweise 1:1,5 bis 1:6 ein. Diese Angaben beziehen sich auf die Feststoffe in den Dispersionen bzw. Lösungen der Polymeren.

Eine andere Möglichkeit der Herstellung der feinteiligen Mischungen besteht darin, daß man ein amphiphiles Polymer in Form eines Pulvers oder einer Schmelze in einer wäßrigen Lösung eines Polycarboxylats dispergiert. Auch hierbei kann es von vorteil sein, die Herstellung der wäßrigen Mischung der Polymeren in Gegenwart von Stabilisatoren c) für die wäßrige Dispersion vorzunehmen.

Die wäßrige Dispersion aus den Komponenten a), b) und gegebenenfalls c) wird durch Sprühtrocknung zu einer feinteiligen polymeren Mischung verarbeitet. Unter Sprühtrocknung sollen alle Konvektionstrocknungsverfahren verstanden werden, z.B. die Sprühtrocknung oder die Sprühwirbelschichttrocknung, bei der man die zu trocknende Dispersion auf ein Wirbelbett sprüht oder in anderer Weise dosiert. Bei solchen Trocknungsverfahren fallen Pulver oder Granulate an. Der mittlere Teilchendurchmesser der so erhältlichen feinteiligen Mischungen beträgt beispielsweise 20 µm bis 3 mm und liegt vorzugsweise von 150 µm bis 1,2 mm. Falls gewünscht, können die feinteiligen Mischungen durch nachträgliches Erhitzen zu größeren Gebilden agglomeriert werden.

Die feinteiligen Mischungen werden als Zusatz zu Waschmitteln und als Wäschenachbehandlungmittel verwendet. Die Waschmittelformulierungen können beispielsweise 0,1 bis 20, vorzugsweise 1 bis 8 Gew.-% der feinteiligen Mischungen enthalten. Die erfindungsgemäß zu verwendenden feinteiligen Mischungen wirken in dem Waschmittel als Soil-Release-Polymere und als Builder.

Die Waschmittel enthalten mindestens ein Tensid und gegebenenfalls sonstige übliche Bestandteile. Vorzugsweise werden solche Tenside verwendet, die biologisch abbaubar sind. Die Waschmittel können pulverförmig sein oder auch in flüssiger Einstellung vorliegen. Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Waschmitteln können Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren.

Die Prozentangaben in den Beispielen sind Gewichtsprozent.

Beispiel 1

Eine 15 %ige wäßrige Dispersion eines Polyesters, der Polyethylenterephthalat- und Polyoxyethylenterephthalateinheiten im Molverhältnis 1,5 : 1,0 enthielt und eine Molmasse $M_w$ 8000 und Polyethylenoxidsegmente der Molmasse $M_n$ 1500 hatte, wurde bei Raumtemperatur mit einer 60%igen wäßrigen Lösung eines mit Natronlauge teilneutralisierten Copolymerisats aus 70 % Acrylsäure und 30 % Maleinsäure und einer Molmasse $M_w$ 70000 unter intensivem Rühren so gemischt, daß das Gewichtsverhältnis der Polymeren 1:3 betrug Der pH-Wert der wäßrigen Copolymerisatlösung wurde vor Zugabe der Dispersion des Soil-Release-Polymers auf 4,5 eingestellt. Die erhaltene stabile Dispersion wurde fortlaufend gerührt und in einem Laborsprühtrockner versprüht. Man erhielt ein feines farbloses, lagerstabiles und gut rieselfähiges Pulver mit einer mittleren Teilchengröße von 170 µm.

Beispiel 2

Eine 15 %ige wäßrige Lösung des in Beispiel 1 beschriebenen amphiphilen Polymeren wurde bei Raumtemperatur mit einer solchen Menge einer 22,6 %igen wäßrigen Lösung einer Polyasparaginsäure der Molmasse $M_w$ 12 000 (der pH-Wert der wäßrigen Lösung betrug 4,5) gemischt, daß das Gewichtsverhältnis der Polymeren 1:3 betrug. Die erhaltene Dispersion fortlaufend gerührt und in einem Laborsprühtrockner versprüht. Man erhielt ein feines farbloses, lagerstabiles und gut rieselfähiges Pulver, das eine mittlere Teilchengröße von 130 µm hatte.

Beispiel 3

Eine 15 %ige wäßrige Dispersion des in Beispiel 1 beschriebenen amphiphilen Polymers wurde bei Raumtemperatur mit einer solchen Menge einer auf pH 3,5 eingestellten 24,7 %igen wäßrigen Lösung einer mit Natronlauge teilneutralisierten Oligocitronensäure gemischt, daß das Gewichtsverhältnis der Polymeren 1 : 3 gemischt.

Die Oligocitronensäure wurde folgendermaßen hergestellt:

96,0 g wasserfreie Citronensäure wurden in 96 g Dioxan bei 60°C gelöst und 25,5 g Acetanhydrid innerhalb 1 h zugegeben. Nach weiteren 30 min bei 60°C wurden auf 100°C aufgeheizt und 1 h bei 100°C gehalten. Anschließend wurde wieder auf 60°C abgekühlt. Der Zyklus aus Acetanhydridzulauf, Tempern bei 60°C, Aufheizen auf 100°C und Abkühlung wurde noch dreimal wiederholt, wobei 25,5 g, 10,2 g bzw. 10,2 g Acetanhydrid zugegeben wurden. Anschließend wurde an einem Rotationsverdampfer das Eisessig/Dioxan Azeotrop abdestilliert. Zur Abtrennung von Restessigsäure wurde noch zweimal je 200 g Dioxan zugegeben und die Dioxan/Eisessig-Mischung abdestilliert.

Die erhaltene stabile Dispersion von Polyester in der wäßrigen Lösung der Oligocitronensäure wurde mit Hilfe eines Laborsprühtrockners zu einem feinen farblosen lagerstabilen und gut rieselfähigem Pulver versprüht. Die mittlere Teilchendurchmesser des Pulvers betrug 190 µm.

Beispiel 4

Eine 15 %ige wäßrige Dispersion des in Beispiel 1 beschriebenen amphiphilen Polymers wurde bei Raumtemperatur mit einer durch Zugabe von Natronlauge auf pH 4,5 eingestellten 44,8 %igen wäßrigen Lösung einer teilneutralisierten Oligomaleinsäure der Molmasse $M_w$ 950 im Gewichtsverhältnis 1 : 3, bezogen auf die Polymeren, gemischt und 15 Minuten intensiv gerührt. Die so erhaltene stabile Dispersion wurde anschließend in einem Laborsprühtrockner versprüht. Man erhielt ein feines, farbloses lagerstabiles und gut rieselfähiges Pulver, das eine mittlere Teilchengröße von 120 µm hatte.

Beispiel 5

Eine 15 %ige wäßrige Lösung eines amphiphilen Polyesters, der Polyethylenterephthalat- und Polyoxyethylenterephthalat-Einheiten im Molverhältnis von 4 : 1 enthielt, eine Molmasse $M_w$ 10000 hatte und Polyethylenglykol-blöcke eines Molgewichts $M_n$ von 4 000 aufwies, wurde bei Raumtemperatur mit einer durch Zugabe von Natronlauge auf pH 3,5 eingestellten 45 %igen wäßrigen Lösung von Citronensäure im Gewichtsverhältnis 1 : 3 gemischt und intensiv gerührt. Die so erhaltene stabile Dispersion wurde anschließend in einem Laborsprühtrockner versprüht. Man erhielt ein feines, farbloses, lagerstabiles und gut rieselfähiges Pulver, das eine mittlere Teilchengröße von 240 µm hatte.

Beispiel 6

Eine 15 %ige wäßrige Dispersion des im Beispiel 5 beschriebenen amphiphilen Polyesters wurde bei Raumtemperatur mit einer 43,2 %igen Lösung eines Terpolymerisats aus 40 Mol-% Acrylsäure, 10 Mol-% Maleinsäure und 50 Mol-% Vinylacetat im Gewichtsverhältnis 1 : 3, bezogen auf die Polymeren, gemischt. Das Terpolymerisat hatte eine Molmasse $M_w$ 5000. Die wäßrige Lösung des Terpolymerisats war durch Zugabe von Natronlauge auf einen pH-Wert von 3,5 eingestellt worden. Man erhielt eine stabile Dispersion des amphiphilen Polyesters in der wäßrigen teilneutralisierten Terpolymerisatlösung. Diese Dispersion wurde in einem Laborsprühtrockner versprüht. Es resultierte ein feines farbloses, lagerstabiles und gut rieselfähiges Pulver, das eine mittlere Teilchengröße von 180 µm hatte.

Beispiel 7

Eine 20 %ige wäßrige Lösung eines Pfropfcopolymerisats von 1,6 Teilen Vinylacetat auf 1 Teil Polyethylenoxid der Molmasse $M_n$ von 6000 werden auf eine Temperatur von 50°C erwärmt und mit einer 40 %igen wäßrigen Lösung des in Beispiel 1 beschriebenen partiell neutralisierten Copolymerisats aus Acrylsäure und Maleinsäure im Gewichtsverhältnis 1 : 10, bezogen auf die Polymeren, gemischt. Man erhielt eine stabile, bei Raumtemperatur fließfähige Dispersion mit einer Viskosität von 1800 mPas. Diese Dispersion wurde anschließend zu einem Pulver mit einer mittleren Teilchengröße von 270 µm versprüht.

Beispiel 8

Die in Beispiel 7 beschriebene 20 %ige wäßrige Lösung des Pfropfcopolymers wurde bei einer Temperatur von 50°C mit einer 40 %igen wäßrigen Lösung der mit Natronlauge teilneutralisierten im Beispiel 3 beschriebenen Oligocitronensäure im Gewichtsverhältnis 1 : 10, bezogen auf die Polymeren, gemischt. Man erhielt eine stabile, bei Raumtemperatur fließfähige Lösung, mit einr Viskosität von 980 mPas. Diese Lösung wurde zu einem Pulver versprüht, das eine mittlere Teilchengröße von 260 µm hatte.

Anwendungstechnische Beispiele

Die schmutzablösenden Eigenschaften der oben beschriebenen pulverförmigen Polymergemische wurden im Waschtest ermittelt. Die Waschbedingungen sind in Tabelle 1 angegeben. Das Prüfgewebe wurde dreimal vorgewaschen, danach bestimmte man die Remission $R^1$ (Meßgerät: Data color 2000). Das Prüfgewebe wurde dann mit gebrauchtem Motoröl angeschmutzt. Nach einer Einwirkungsdauer des Motoröls auf das Prüfgewebe von 24 Stunden bestimmte man die Remission $R^2$ der angeschmutzten Prüfgewebe. Danach wurde das Prüfgewebe nochmals gewa-schen und die Remission $R^3$ gemessen. Die Schmutzablösung S in Prozent wurde nach der Formel

$$S = (R^3 - R^2) / (R^1 - R^2) * 100$$

berechnet.

Tabelle 1 -

| Waschbedingungen | |
|---|---|
| Waschgerät | Launder-o-meter |
| Waschmittelflotte | 250 ml |
| Waschmitteldosierung | 6 g/l |
| Waschzeit | 30 min |
| Waschtemperatur | 60°C |
| Vorwaschzyclen | 3 |
| Prüfgewebe | 10 g Baumwolle, 5 g Polyester/Baumwolle, 5 g Polyester |
| Anschmutzung | 0,2 g gebrauchtes Motoröl auf Polyester |

Die Tabelle 2 enthält die Zusammensetzung der verwendeten Testwaschmittel. Die in Tabelle 2 angegebene Waschmittelformulierung enthielt jeweils eine 1 %ige Soil-Release-Polyester enthaltende Menge Produkt aus dem angegebenen Beispiel.

Tabelle 2 -

| Waschmittelformulierung | |
|---|---|
| | Gew.-Anteil im Waschmittel [%] |
| Fettalkoholsulfat ($C_{12}C_{14}$) | 18 |
| $C_{13}/C_{15}$-Oxoalkohol + 7 Ethylenoxid | 6,6 |
| Fettsäure, Na-salz | 1,8 |
| Natriumcarbonat | 7,0 |
| Magnesiumsilikat | 0,8 |
| Natriumcitrat | 12 |
| Copolymerisat aus 70 % Acrylsäure und 30 % Maleinsäure, Molekulargewicht 60000 | 5,0 |
| Carboxymethylcellulose (60 %) | 0,8 |
| Polyvinylpyrrolidon, Molekulargewicht 40000 | 1,5 |
| Zeolith A | 45 |
| Wasser | Rest auf 100 |

Die Ergebnisse in Tabelle 3 zeigen, daß in allen Fällen eine Schmutzablösung (S) von über 80 % erfolgt, wie dies auch für eine Dispersion des reinen Wirkstoffes der Fall ist. Bei der Konfektionierung als Sprühpulver in Mischung mit Poly-Na-carboxylaten bleibt die volle Wirksamkeit des Polymeren somit erhalten.

Tabelle 3 -

| Schmutzablösung | | | | | |
|---|---|---|---|---|---|
| Beispiel | Vergl.-Beispiel | Produkt aus Beispiel | angeschmutzt | gewaschen | Schmutzablösung (S) [%] |
| | 1 | | 22,5 | 45,2 | 39,2 |
| | 2 | Polyester gem. Beispiel 1 (ohne Polycarboxylat) | 22,0 | 73,8 | 87,7 |
| 9 | - | 1 | 22,3 | 74,8 | 89,4 |
| 10 | - | 3 | 22,1 | 73,8 | 87,7 |
| 11 | - | 4 | 22,7 | 74,3 | 88,5 |
| 12 | - | 5 | 22,8 | 76,2 | 91,7 |
| 13 | - | 6 | 22,7 | 69,3 | 80,0 |

Die Dispergierbarkeit einer erfindungsgemäß durch Sprühtrocknung hergestellten Mischung aus AS/MS-Copolymer (Na-Salz, pH 4,5) und dem amphiphilen Polyester gemäß Beispiel 1 wurde im Vergleich zur Dispergierbarkeit einer Mischung der gleichen Zusammensetzung, die gemäß dem Verfahren in Beispiel 1 der US-A 4 569 772 hergestellt wurde, geprüft.

Zur Prüfung der Dispergierbarkeit wurden die Mischungen 5%ig in Wasser 10 min gerührt und unlösliche Anteile mit einer Nutsche abgetrennt. Die Versuche wurden bei 20°C und bei 40°C durchgeführt. Tabelle 4 zeigt die Ergebnisse.

Tabelle 4

| | ungelöster Anteil in Gew.-% | |
|---|---|---|
| | bei 20°C | bei 40°C |
| Mischung gemäß Beispiel 1 | < 1 % | < 1 % |
| Mischung gemäß Beispiel 1 von US-A-4 569 772 | 17 % | 6 % |

**Patentansprüche**

1. Verfahren zur Herstellung von feinteiligen Mischungen aus amphiphilen Polymeren und Polycarboxylaten, dadurch gekennzeichnet, daß man

    (a) wäßrige Dispersionen oder kolloidale wäßrige Lösungen mindestens eines amphiphilen Polymers und

    (b) eine wäßrige Lösung eines Polycarboxylats

    im Gewichtsverhältnis (a) : (b) von 1 : 1 bis 1 : 20, jeweils bezogen auf die Feststoffe, mischt oder mindestens ein amphiphiles Polymer in einer wäßrigen Lösung eines Polycarboxylats dispergiert und die so erhältlichen Dispersionen durch Sprühtrocknung zu einer feinteiligen Polymermischung verarbeitet.

2. Verfahren nach Anspruch 1, dadurch gekennzeichnet, daß man als amphiphile Polymere Polyester mit einer Molmasse $M_w$ von 4000 bis 60000 einsetzt, die als hydrophile Einheiten Polyethylenglykol, Blockcopolymerisate aus Ethylenoxid und Propylenoxid und/oder Butylenoxid mit Molmassen $M_N$ von 500 bis 8000 und/oder Sulfogruppen enthaltende ein- oder mehrbasische Carbonsäuren und als hydrophobe Einheiten kondensierte Blöcke aus aromatischen mehrbasischen Carbonsäuren, gegebenenfalls in Kombination mit aliphatischen mehrbasischen Carbonsäuren, $C_2$- bis $C_4$-Alkylenglykolen und/oder drei- oder mehrwertigen Alkoholen enthalten.

3. Verfahren nach Anspruch 1 oder 2, dadurch gekennzeichnet, daß man als amphiphile Polymere Polyester einsetzt, die Einheiten von

    (1) Ethylenterephthalat und

    (2) Polyoxyethylenterephthalat von Polyethylenglykolen mit Molmassen Mn von 1000 bis 7500

    im Gewichtsverhältnis (1) : (2) von 1:1 bis 1:25 enthalten.

4. Verfahren nach Anspruch 1 oder 2, dadurch gekennzeichnet, daß man als amphiphile Polymere Polyester einsetzt, die erhältlich sind durch Kondensation von

    (1) Carbonsäuren mit mindestens 2 Carboxylgruppen, deren Estern, Anhydriden oder Mischungen,

    (2) mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und

    (3) wasserlöslichen Anlagerungsprodukten von 5 bis 80 mol mindestens eines Alkylenoxids an 1 mol $C_8$- bis $C_{24}$-Alkohole, $C_8$- bis $C_{18}$-Alkylphenole oder $C_8$- bis $C_{24}$-Alkylamine

    im Molverhältnis (1):(2):(3) von 100 : (25 bis 2500): (5 bis 110) bei Temperaturen von mindestens 120°C bis zu Molmassen $M_w$ von 4000 bis 50000.

5. Verfahren nach Anspruch 1 oder 2, dadurch gekennzeichnet, daß man als amphiphile Polymere Polyester einsetzt, die Blöcke aus

    (1) Estereinheiten aus Polyalkylenglykolen einer Molmasse von 500 bis 7500 und aliphatischen Dicarbonsäuren und/oder Monohydroxycarbonsäuren und

(2) Estereinheiten aus aromatischen Dicarbonsäuren und mehrwertigen Alkoholen

enthalten und Molmassen $M_w$ von 4000 bis 25000 haben.

6. Verfahren nach einem der Ansprüche 1 bis 5, dadurch gekennzeichnet, daß man als (b) Polymerisate von monoethylenisch ungesättigten Carbonsäuren, Polyamidocarboxylate, Polyestercarboxylate, Polyacetalcarboxylate, Pfropfpolymerisate von monoethylenisch ungesättigten Mono- und/oder Dicarbonsäuren auf Mono- und/oder Polysacchariden oder Polyalkylenoxiden, Citronensäure, oxidierte Stärken oder Mischungen der genannten Polycarboxylate einsetzt.

7. Verfahren nach Anspruch 6, dadurch gekennzeichnet, daß man als (b) Copolymerisate aus Acrylsäure und Maleinsäure, Oligomaleinsäure, Polyasparaginsäure, Citronensäure, monooxidierte Stärken oder Mischungen der genannten Verbindungen einsetzt.

## Claims

1. A process for preparing finely divided mixtures of amphiphilic polymers and polycarboxylates, which comprises mixing

    (a) aqueous dispersions or colloidal aqueous solutions with at least one amphiphilic polymer, and

    (b) an aqueous solution of a polycarboxylate

    in a weight ratio of (a) : (b) of from 1 : 1 to 1 : 20, each based on the solids, or dispersing at least one amphiphilic polymer in an aqueous solution of a polycarboxylate, and spray-drying the dispersions thus obtainable to form a finely divided polymer mixture.

2. A process as claimed in claim 1, wherein the amphiphilic polymers used are polyesters having a molecular mass $M_w$ of from 4000 to 60000 where the hydrophilic units are polyethylene glycol, block copolymers of ethylene oxide and propylene oxide and/or butylene oxide having molecular masses $M_N$ of from 500 to 8000 and/or sulfo-containing monobasic or polybasic carboxylic acids and the hydrophobic units are condensed blocks of aromatic polybasic carboxylic acids, optionally in combination with aliphatic polybasic carboxylic acids, $C_2$-$C_4$-alkylene glycols and/or trihydric or more highly hydric alcohols.

3. A process as claimed in claim 1 or 2, wherein the amphiphilic polymers used are polyesters containing units of

    (1) ethylene terephthalate, and

    (2) polyoxyethylene terephthalate of polyethylene glycols having molecular masses Mn of from 1000 to 7500

    in a weight ratio of (1) : (2) of from 1:1 to 1:25.

4. A process as claimed in claim 1 or 2, wherein the amphiphilic polymers used are polyesters which are obtainable by condensation of

    (1) carboxylic acids having at least 2 carboxyl groups, their esters, anhydrides or mixtures,

    (2) at least dihydric alcohols and/or addition products of from 1 to 5 mol of at least one alkylene oxide having 2 or 3 carbon atoms with 1 mol of an at least dihydric alcohol or mixtures, and

    (3) water-soluble addition products of from 5 to 80 mol of at least one alkylene oxide with 1 mol of $C_8$-$C_{24}$-alcohols, $C_8$-$C_{19}$-alkylphenols or $C_8$-$C_{24}$-alkylamines

    in a molar ratio of (1):(2):(3) of 100 : (from 25 to 2500) : (from 5 to 110) at temperatures of at least 120°C to molecular masses $M_w$ from 4000 to 50000.

5. A process as claimed in claim 1 or 2, wherein the amphiphilic polymers used are polyesters containing blocks of

(1) ester units of polyalkylene glycols having a molecular mass of from 500 to 7500 and aliphatic dicarboxylic acids and/or monohydroxycarboxylic acids, and

(2) ester units of aromatic dicarboxylic acids and polyhydric alcohols

and having molecular masses $M_w$ from 4000 to 25000.

6. A process as claimed in any of claims 1 to 5, wherein (b) comprises polymers of monoethylenically unsaturated carboxylic acids, polyamidocarboxylates, polyestercarboxylates, polyacetalcarboxylates, graft polymers of monoethylenically unsaturated mono- and/or dicarboxylic acids on mono- and/or polysaccharides or polyalkylene oxides, citric acid, oxidized starches or mixtures thereof.

7. A process as claimed in claim 6, wherein (b) comprises copolymers of acrylic acid and maleic acid, oligomaleic acid, polyaspartic acid, citric acid, monooxidized starches or mixtures thereof.

## Revendications

1. Procédé de préparation de mélanges finement divisés à base de polymères amphiphiles et de polycarboxylates, caractérisé en ce que l'on mélange

   (a) des dispersions aqueuses ou des solutions aqueuses colloïdales d'au moins un polymère amphiphile et
   (b) une solution aqueuse d'un polycarboxylate

   dans un rapport en poids (a) : (b) de 1:1 à 1:20, à chaque fois par rapport aux matières solides, ou bien que l'on disperse au moins un polymère amphiphile dans une solution aqueuse d'un polycarboxylate, et que l'on transforme les dispersions ainsi obtenues en un mélange de polymères finement divisé par séchage par pulvérisation.

2. Procédé selon la revendication 1, caractérisé en ce que l'on utilise en tant que polymères amphiphiles, des polyesters ayant une masse molaire Mw de 4 000 à 60 000, qui contiennent en tant que motifs hydrophiles du polyéthylèneglycol, des copolymères séquencés à base d'oxyde d'éthylène et d'oxyde de propylène et/ou d'oxyde de butylène ayant des masses molaires $M_N$ de 5000 à 8 000 et/ou des acides carboxyliques ayant une ou plusieurs acidités et comportant des groupements sulfo, et en tant que motifs hydrophobes des blocs condensés à base d'acides carboxyliques aromatiques ayant plusieurs acidités, éventuellement en combinaison avec des acides carboxyliques aliphatiques ayant plusieurs acidités, des alkylèneglycols en $C_2$-$C_4$, et/ou des alcools tri- ou multifonctionnels.

3. Procédé selon la revendication 1 ou 2, caractérisé en ce que l'on utilise en tant que polymères amphiphiles des polyesters contenant des motifs

   (1) éthylènetéréphtalate et
   (2) polyoxyéthylènetéréphtalate de polyéthylèneglycols ayant une masse molaire $M_N$ de 1 000 à 7 500,

   dans un rapport en poids (1) : (2) de 1:1 à 1:25.

4. Procédé selon la revendication 1 ou 2, caractérisé en ce que l'on utilise en tant que polymères amphiphiles des polyesters pouvant être obtenus par condensation

   (1) d'acides carboxyliques ayant au moins 2 groupements carboxyle, de leurs esters, anhydrides ou de leurs mélanges,
   (2) d'alcools au moins difonctionnels et/ou de produits d'addition de 1 à 5 moles d'au moins un oxyde d'alkylène avec 2 ou 3 atomes de carbone sur 1 mole d'un alcool au moins difonctionnel ou de leurs mélanges et
   (3) de produits d'addition hydrosolubles de 5 à 80 moles d'au moins un oxyde d'alkylène sur 1 mole d'alcools en $C_8$-$C_{24}$, d'alkylphénols en $C_8$-$C_{18}$ ou d'alkylamines en $C_8$-$C_{24}$,

   dans un rapport en moles (1) : (2) : (3) de 100:(25 à 2500):(5 à 110) à des températures d'au moins 120°C jusqu'à des masses molaires Mw de 4 000 à 50 000.

**5.** Procédé selon la revendication 1 ou 2, caractérisé en ce que l'on utilise en tant que polymères amphiphiles des polyesters contenant des blocs à base

(1) de motifs esters à base de polyalkylèneglycols ayant une masse molaire de 500 à 7 500 et d'acides dicarboxyliques aliphatiques et/ou d'acides monohydroxycarboxyliques et
(2) de motifs esters à base d'acides dicarboxyliques aromatiques et d'alcools polyfonctionnels

et présentent des masses molaires Mw de 4 000 à 25 000.

**6.** Procédé selon l'une quelconque des revendications 1 à 5, caractérisé en ce que l'on utilise en tant que (b) des polymères d'acides carboxyliques à insaturation monoéthylénique, des polyamidocarboxylates, des polyestercarboxylates, des polyacétalcarboxylates, des polymères greffés d'acides mono- et/ou dicarboxyliques à insaturation monoéthylénique sur des mono- et/ou polysaccharides ou des poly(oxyde d'alkylène), l'acide citrique, les amidons oxydés ou des mélanges des polycarboxylates mentionnés.

**7.** Procédé selon la revendication 6, caractérisé en ce que l'on utilise en tant que (b) des copolymères d'acide acrylique et d'acide maléique, des oligomères d'acide maléique, de l'acide polyaspartique, de l'acide citrique, des amidons mono-oxydés ou des mélanges des composés mentionnés.